**Europäisches Patentamt**

**European Patent Office**

**Office européen des brevets**

(19)

(11) Veröffentlichungsnummer: **0 193 136**
**A1**

(12)

# EUROPÄISCHE PATENTANMELDUNG

(21) Anmeldenummer: 86102293.7

(22) Anmeldetag: 21.02.86

(51) Int. Cl.⁴: **B 65 G 69/28**

(30) Priorität: 01.03.85 DE 3507215

(43) Veröffentlichungstag der Anmeldung:
03.09.86 Patentblatt 86/36

(84) Benannte Vertragsstaaten:
AT BE CH DE FR GB IT LI LU NL SE

(71) Anmelder: Alten, Kurt
Ringstrasse 14
D-3015 Wennigsen(DE)

(72) Erfinder: Alten, Kurt
Ringstrasse 14
D-3015 Wennigsen(DE)

(74) Vertreter: Depmeyer, Lothar
Auf der Höchte 30
D-3008 Garbsen 1(DE)

(54) Überladebrücke.

(57) Die Erfindung betrifft eine Überladebrücke mit einer durch zwei Hubzylinder (13) verschwenkbaren Brückenplatte (1), wobei die beiden Hubzylinder (13) unterhalb der Ränder der Brückenplatte (1) angeordnet sind und wobei unterhalb der Brückenplatte (1) Seitenteile (8) als Bestandteile des Brückenuntergestells vorgesehen sind und wobei außerdem diese Seitenteile (8) durch ein quer verlaufendes Rohr (11) verbunden sind. Um eine vereinfachte Befestigung der beiden Hubzylinder (13) ermöglichen zu können, sind die Zylinder mit einer Schelle (12) an den den Seitenteilen (8) zugekehrten Enden des Rohres befestigt, wobei auch die oberen Zylinderenden mittels Schelle (14) befestigt sein können.

Fig. 1

EP 0 193 136 A1

Kurt Alten in 3o15 Wennigsen

## Überladebrücke

Die Erfindung betrifft eine Überladebrücke für Rampen mit einer durch zwei Arbeitszylinder verschwenkbaren Brückenplatte, wobei sich die Zylinder unterhalb der seitlichen Ränder der Brückenplatte befinden, unterhalb der Brückenplatte in einer Rampenausnehmung bei der Brückenmontage mit absenkbare Seitenteile vorgesehen sind und diese Seitenteile mit den seitlichen Rahmenteilen der Brücke verbunden sind und wobei ferner diese Seitenteile im Bereich ihres unteren Randes durch eine quer zur Brückenplatte verlaufendes Rohr in Verbindung stehen.

Bei den bekannten Überladebrücken dieser Art sind die unteren Enden der Arbeitszylinder mit den Seitenteilen an der Stelle befestigt, an der auch die Rohrenden mit den Seitenteilen verschweisst sind. Das Rohr dient hierbei zur Abstandshalterung für die Seitenteile und zur Lagerung eines Pumpenaggregates auf halber Länge des Rohres.

Der Erfindung liegt die Aufgabe zugrunde, die obigen Überladebrücken so zu verbessern, dass eine einfache Befestigung der beiden Arbeitszylinder an ihrem unteren Ende möglich ist, und zwar auch bei solchen Seitenteilen, die im Bereich ihres unteren Randes keine nach innen

0193136

vorspringenden Abschnitte aufweisen.

Zur Lösung dieser Aufgabe sind erfindungsgemäss die beiden Arbeitszylinder an ihren unteren Enden mit einer Schelle an den Rohrenden, und zwar praktisch unmittelbar an den Rohrabschnitten befestigt, die an die Seitenteile anschliessen. Mit Vorteil werden dabei auch die oberen Enden der Arbeitszylinder mittels Schellen an rohrförmig gestalteten Teilen der Brückenplatte befestigt.

Bei einer solchen Lagerung der Arbeitszylinder kann durch die Schellen eine schnelle, sichere Montage der Arbeitszylinder erfolgen, und zwar an einem Rohr, dessen Durchmesser vergleichsweise gering ist. Dieser kleine Durchmesser ist deshalb möglich, weil die Biege-beanspruchung des Rohres sehr klein ist infolge der Anbringung der Arbeitszylinder unmittelbar an den Rohrenden.

Weitere Einzelheiten der Erfindung werden anhand der Zeichnung erläutert, in der ein Ausführungsbeispiel dargestellt ist.

Es zeigen :

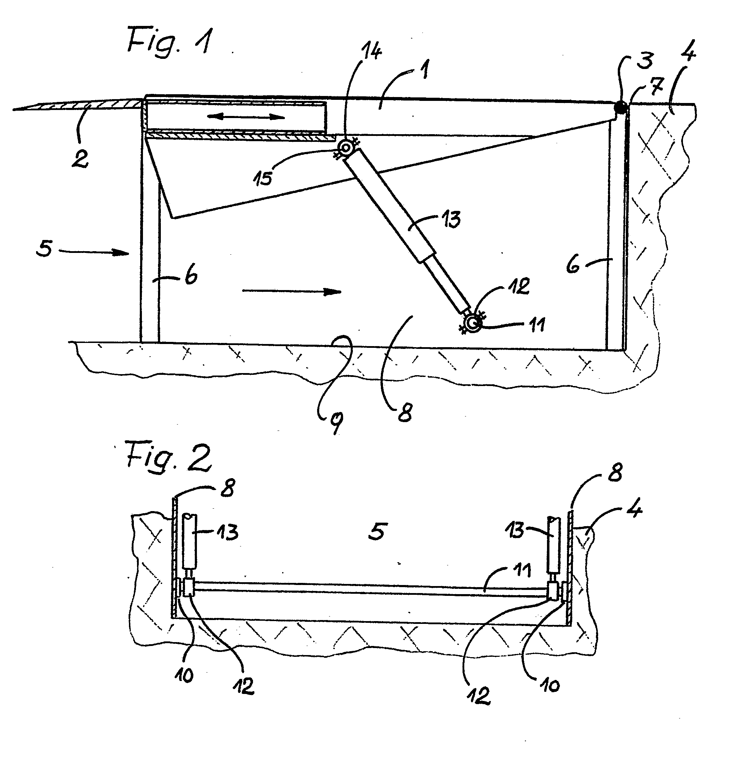

Fig. 1 einen senkrechten Längsschnitt durch eine Überfahrbrücke für Rampen und

Fig. 2 einen senkrechten Teilquerschnitt durch die Brücke gemäss Fig. 1 in Richtung des Pfeiles a gemäss Fig. 1 gesehen.

Die Brückenplatte 1 - in ihrer Ruhestellung, aber mit ausgefahrener Verlängerung 2, über die sich die Brückenplatte 1 auf einer zu be- bzw. entladenden Plattform
abstützen kann. - ist an ihrem hinteren Ende um eine
waagerechte Achse 3 an der Rampe 4 gelagert.

Zur Unterbringung der Überfahrbrücke dient eine quaderförmige Ausnehmung 5 in der Rampe 4.

Um die Überfahrbrücke schnell montieren zu können, ist
der Brückenplatte 1 ein Untergestell zugeordnet, das
aus Eckprofilen 6 und einem nicht näher dargestellten
Rahmen besteht, der die Kanten 7 der Rampe 4 einfasst.
Die Seitenflächen der Ausnehmung 5 sind mit einem plattenförmigen Seitenteil 8 des Untergestells bedeckt, das
ebenfalls mit dem Untergestell abgesenkt wird, wenn die
Überfahrbrücke montiert wird.

Im Bereich des Bodens 9 der Ausnehmung 5 befindet sich
an gegenüberliegenden Stellen der Seitenteile 3 eine
Befestigung 1o für ein quer zur Brückenplatte 1 verlaufendes dünnes Rohr 11. Unmittelbar neben der Befestigung 1o
umgreifen Schellen 12 das Rohr 11, die zur Befestigung
von zwei Hubzylindern 13 für die Brückenplatte 1 dienen.
Diese Hubzylinder 13 sind im übrigen an den oberen Enden
mittels Schelle 14 an rohrförmigen Elementen 15 der
Brückenplatte 1 befestigt.

Hierdurch wird eine sehr einfache Befestigung und Lagerung
der Hubzylinder 13 ermöglicht. Zudem kann der Querschnitt
bzw. Rohrdurchmesser des Rohres 11 sehr dünn gehalten
werden; die Beanspruchung auf Biegung ist sehr gering,
weil sich die Schellen 12 unmittelbar neben den Befestigungen
1o befinden.

Es sein noch erwähnt, dass auch der Verlängerung 2 ein Arbeitszylinder zugeordnet ist, der die Längsbewegung des Schlittens 14 der Verlängerung 2 bewirkt.

Ferner ist auf die Darstellung der Druckanschlüsse für die beiden Hubzylinder 13 verzichtet worden. Hier werden übliche, bekannte Bauteile und Druckaggregate benutzt. Auch können die Schellen 12, 14 so eingerichtet sein, dass sie geringe Verdrehungen gegenüber den von ihnen umschlossenen Teilen zulassen. Aus diesem Grunde umschliessen die Schellen 12, 14 ihre zugehörigen Rohrabschnitte mit geringem Spiel.

Es hat sich gezeigt, dass es möglich ist, auch bei hochbelastbaren Brücken mit dünn wandigen Rohren 11 mit einem Aussendurchmesser von etwa 40 - 45 mm auszukommen.

Ansprüche

1. Überladebrücke für Rampen mit einer durch zwei Arbeitszylinder ( Hubzylinder ) verschwenkbaren Brückenplatte, wobei sich die beiden Arbeitszylinder unterhalb der seitlichen Ränder der Brückenplatte befinden, unterhalb der Brückenplatte in einer Rampenausnehmung bei der Brückenmontage mit absenkbare Seitenteile als Bestandteile des Brückenuntergestells vorgesehen sind und wobei ferner diese Seitenteile im Bereich ihres unteren Randes durch ein quer zur Brückenplatte verlaufendes Rohr in Verbindung stehen, dadurch gekennzeichnet, dass die beiden Arbeitszylinder (13) mittels Schellen (12) an den Enden des Rohres (11) befestigt sind.

2. Brücke nach Anspruch 1 , dadurch gekennzeichnet, dass auch die oberen Enden der Arbeitszylinder (13) mittels Schellen (14) an rohrförmigen Teilen (15) der Brückenplatte (1) befestigt sind.

3. Brücke nach Anspruch 1, dadurch gekennzeichnet, dass die Schellen (12) unmittelbar an die Befestigungselemente für die Rohrenden anschliessen.

4. Brücke nach Anspruch 1, dadurch gekennzeichnet, dass das Rohr (11) ausschliesslich der Verbindung der Seitenteile (8) und der Befestigung der Arbeitszylinder (13) dienen.

5. Brücke nach Anspruch 1, dadurch gekennzeichnet, dass die Schellen (14) das Rohr (11) mit geringem Spiel umschliesse

0193136

Fig. 1

Fig. 2

### EUROPÄISCHER RECHERCHENBERICHT

## EINSCHLÄGIGE DOKUMENTE

EP 86102293.7

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | <u>DE - A1 - 2 607 750</u> (TREPEL AG) <br> * Fig. 1 * <br> -- | 1 | B 65 G 69/28 |
| A | <u>DE - A1 - 3 305 948</u> (ALTEN) <br> * Fig. 3,4 * <br> -- | 1 | |
| A | <u>DE - B - 1 199 695</u> (WICHMANN) <br> * Fig. 1 * <br> ---- | 1 | |

| RECHERCHIERTE SACHGEBIETE (Int. Cl 4) |
|---|
| B 65 G |

Der vorliegende Recherchenbericht wurde für alle Patentansprüche erstellt.

| Recherchenort | Abschlußdatum der Recherche | Prüfer |
|---|---|---|
| WIEN | 09-06-1986 | PISSENBERGER |